# EUROPÄISCHE PATENTSCHRIFT

(11) **EP 4 605 718 B1**
(45) Veröffentlichungstag und Bekanntmachung des Hinweises auf die Patenterteilung: **27.05.2026**
(21) Anmeldenummer: 23772118.8
(22) Anmeldetag: 07.09.2023
(51) Int. Cl.: G01K 1/143, G01K 1/18, G01K 13/02, G01F 1/684

(54) **MESSAUFNEHMER FÜR EINE THERMISCHE MESSGRÖSSE UND MESSSTELLE MIT EINEM SOLCHEN MESSAUFNEHMER**
MEASUREMENT SENSOR FOR A THERMAL MEASUREMENT VARIABLE AND MEASUREMENT STATION COMPRISING SUCH A MEASUREMENT SENSOR
CAPTEUR DE MESURE POUR UNE VARIABLE DE MESURE THERMIQUE ET STATION DE MESURE COMPRENANT UN TEL CAPTEUR DE MESURE

(30) Priorität: 19.10.2022 DE 102022127611
(43) Veröffentlichungstag der Anmeldung: 27.08.2025
(73) Patentinhaber: Endress+Hauser Wetzer GmbH+Co. KG, 84748 Nesselwang (DE)
(72) Erfinder: SCHALLES, Marc, 99097 Erfurt (DE); UMKEHRER, Alfred, 87659 Hopferau (DE); VRDOLJAK, Pavo, 87484 Nesselwang (DE); WIEDEMANN, Stephan, 87544 Bihlerdorf (DE); WOLF, Georg, 87616 Marktoberdorf (DE)
(74) Vertreter: Endress + Hauser Group Services (Deutschland) AG+Co. KG
(86) Internationale Anmeldenummer: PCT/EP2023/074660
(87) Internationale Veröffentlichungsnummer: WO 2024/083402

(56) Entgegenhaltungen:
- EP-A2- 3 124 928
- CN-Y- 201 413 197

## Beschreibung

Die Erfindung betrifft einen Messaufnehmer zum Ermitteln einer thermischen Messgröße, insbesondere einer Temperatur eines Mediums oder einer thermisch ermittelten Durchflussrate des Mediums in einem Behältnis, beispielsweise einem Behälter oder einer Rohrleitung.

Hierzu ist ein Temperatursensorelement mit dem Behältnis in thermischen Kontakt zu bringen, wozu ein Koppelelement mit einer Kontaktfläche und einer Sensorkammer vorgesehen, in welche das Temperatursensorelement eingebracht ist. Als Temperatursensorelement in Form eines Widerstandselements sind unter anderem sogenannte Dünnschicht- und Dickschicht-Sensoren sowie sogenannte Heißleiter (auch als NTC-Thermistoren bezeichnet) bekannt geworden. Bei einem Dünnschicht-Sensor, insbesondere einem Resistance Temperature Detector (RTD), kommt beispielsweise ein mit Anschlussdrähten versehenes und auf ein Trägersubstrat aufgebrachtes Sensorelement zum Einsatz, wobei die Rückseite des Trägersubstrats in der Regel metallisch beschichtet ist. Als Temperatursensorelemente werden auch sogenannte Widerstandselemente, welche beispielsweise durch Platinelemente gegeben sind, verwendet, die unter anderem unter den Bezeichnungen PT10, PT100, und PT1000 auch kommerziell erhältlich sind.

Bei Temperatursensorelementen in Form von Thermoelementen wiederum wird die Temperatur durch eine Thermospannung bestimmt, die zwischen den einseitig angeschlossenen Thermodrähten aus unterschiedlichen Materialien entsteht. Zur Temperaturmessung können insbesondere Thermoelemente nach DIN-Norm IEC584, z.B. Thermoelemente vom Typ K, J, N, S, R, B, T oder E, als Temperatursensorelemente eingesetzt werden.

Die Genauigkeit der Temperaturmessung hängt empfindlich von den jeweiligen thermischen Kontakten und der jeweils vorherrschenden Wärmeleitung ab. Die Wärmeströme zwischen dem Medium, dem Behältnis, in welchem sich das Medium befindet, dem Messaufnehmer und der Prozessumgebung spielen hier eine entscheidende Rolle. Für eine zuverlässige Temperaturbestimmung ist es wichtig, dass der jeweilige Temperatursensor und das Medium sich zumindest für eine bestimmte Zeit, welche zur Erfassung der Temperatur erforderlich ist, im Wesentlichen im thermischen Gleichgewicht befinden. Die Zeit für eine Reaktion eines Messaufnehmers auf eine Temperaturänderung wird auch als Ansprechzeit des Messaufnehmers bezeichnet.

Eine hohe Messgenauigkeit lässt sich insbesondere dann erzielen, wenn ein Koppelelement in das jeweilige Medium eintaucht. So sind zahlreiche Messaufnehmer bekannt geworden, bei denen ein Koppelelement direkt mit dem jeweiligen Medium in Kontakt gebracht wird. Auf diese Weise lässt sich gute thermische Kopplung zwischen dem Medium und dem Temperatursensorelement erzielen.

Für verschiedene Prozesse und für viele Behältnisse, insbesondere kleine Behälter oder Rohrleitungen, ist jedoch eine nicht-invasive Bestimmung der Temperatur vorteilhafter. So sind ebenfalls Messaufnehmer bekannt geworden, deren Koppelelemente von außen an dem jeweiligen Behältnis, in dem sich das Medium befindet, befestigt werden können, beispielsweise aus Dokumenten wie der DE 102014 118 206 A1 oder DE 10 2015 113 237 A1. Dies erfordert, dass zur Sicherstellung einer guten thermischen Kopplung verschiedene zusätzliche Aspekte berücksichtigt werden müssen. So ist beispielsweise der mechanische und damit auch der thermische Kontakt zwischen Behälter und dem Koppelelement entscheidend für die erreichbare Messgenauigkeit. Weitere unterschiedliche Ausgestaltungen von Messaufnehmern zur nicht invasiven Temperaturmessung sind beispielsweise in den Dokumenten US2016/0047697A1, DE102005040699B3, EP3230704B1, EP2038625B1, EP3124928A2 und CN201413197Y beschrieben.

Eine zentrale Problematik bei der nicht-invasiven Temperaturbestimmung stellt die Wärmeableitung vom Prozess an die Umgebung dar. Diese sorgt für einen deutlich höheren Messfehler als im Falle einer direkten Einbringung des jeweiligen Koppelelements in den Prozess. Die Wärmeableitung kann dabei auch über Wärmebrücken erfolgen, die durch Komponenten des Messaufnehmers gebildet sind.

Dieselbe Problematik ergibt sich beispielsweise auch für den Fall eines auf einem thermischen Messprinzip beruhenden Messaufnehmers zur Durchflussmessung. Derartige Messaufnehmer umfassen typischerweise zumindest zwei Sensorelemente mit zumindest einem Temperatursensorelement und zumindest einem Heizelement oder beheizbaren Temperatursensor, wobei die Sensorelemente im nicht invasiven Fall mittels eines an einer Rohrwand anliegenden Koppelelements mit einem in dem Rohr strömenden Medium in thermischen Kontakt zu bringen ist.

Ausgehend von der beschriebenen Problematik der Wärmeableitung bei nicht-invasiven thermischen Messaufnehmern liegt der Erfindung die Aufgabe zugrunde, einen Messaufnehmer bereitzustellen, mit welchem die nicht-invasive Ermittlung einer thermischen Messgröße eines Mediums verbessert werden kann.

Die Aufgabe wird erfindungsgemäß gelöst durch den Messaufnehmer gemäß dem unabhängigen Anspruch 1 und die Messstelle gemäß dem Patentanspruch 16.

Vorteilhafte Ausgestaltungen sind Gegenstand der abhängigen Ansprüche.

Der erfindungsgemäße Messaufnehmer zur Bestimmung und/oder Überwachung einer thermischen Prozessgröße, insbesondere einer Temperatur, oder einer thermisch ermittelten Durchflussrate eines Mediums in einem Behältnis unter Kontaktierung einer Oberfläche des Behältnisses mittels einer Kontaktfläche umfasst
ein Koppelelement; und
ein Sensormodul;
wobei das Koppelelement umfasst:
   einen Grundkörper mit einer Kontaktfläche, zum Kontaktieren der Oberfläche des Behältnisses,
   wobei das Koppelelement eine zumindest abschnittsweise zylindrische Sensorkammer zur Aufnahme eines Sensorelements zur Bestimmung und/oder Überwachung der Prozessgröße aufweist,
   wobei die Sensorkammer zumindest abschnittsweise in dem Grundkörper angeordnet ist,
   wobei eine Längsachse der Sensorkammer nicht mehr als vier Radien, beispielsweise nicht mehr als zwei Radien, insbesondere nicht mehr als einen Radius der Sensorkammer von der Kontaktfläche beabstandet ist, wobei
   die Kontaktfläche mehrere Normalenvektoren aufweist, deren Schnittpunkte eine Leitkurve definieren, wobei ein minimaler Abstandsvektor zwischen der Leitkurve und der Längsachse der Sensorkammer gegeben ist, wobei der Abstandsvektor und ein Richtungsvektor der Leitkurve am Schnittpunkt der Leitkurve mit dem Abstandsvektor eine Referenzebene aufspannen, zu welcher die Längsachse der Sensorkammer einen Winkel von nicht weniger als 20°, beispielsweise nicht weniger als 60° und insbesondere nicht weniger als 80° aufweist;
   wobei das Sensormodul umfasst:
      zumindest ein Sensorelement zum Erfassen einer Temperatur;
      mindestens einen Modulbasiskörper; und
      mindestens einen Wärmebrückenkörper;
      wobei das Sensorelement in einem ersten Endabschnitt der Sensorkammer angeordnet ist,
      wobei der Modulbasiskörper an einem dem ersten Endabschnitt abgewandten, zweiten Endabschnitt der Sensorkammer angeordnet ist,
      wobei der mindestens eine Wärmebrückenkörper sich in der Sensorkammer zumindest über einen Abschnitt erstreckt, der zwischen dem Sensorelement und dem Modulbasiskörper verläuft,
      wobei entlang der Längsachse der Sensorkammer Querschnitte der Sensorkammer größer sind als die dazu jeweils koplanaren Querschnitte des mindestens einen Wärmebrückenkörpers kleiner sind als dazu jeweils koplanare Querschnitte der Sensorkammer,
      wobei der mindestens eine Wärmebrückenkörper stoffschlüssig mit dem Modulbasiskörper verbunden ist, und
      wobei der Modulbasiskörper in einem dem Sensorelement abgewandten Endabschnitt der Sensorkammer mit dem Koppelelement stoffschlüssig verbunden ist.

Der Wärmebrückenkörper kann in einer Ausgestaltung der Erfindung insbesondere einen metallischen Werkstoff oder einen keramischen Werkstoff aufweist.

Durch die stoffschlüssigen Verbindungen sowohl zwischen dem Wärmebrückenkörper und dem Modulbasiskörper als auch zwischen dem Modulbasiskörper und dem Koppelelement wird ein Temperaturgradient entlang des Wärmebrückenkörpers minimiert, wodurch Wärmeableitung entlang des Wärmebrückenkörpers minimiert wird.

Es ist von Vorteil, wenn die Längsachse der Sensorkammer, welche das Sensorelement enthält, gewinkelt zur Leitkurve der Kontaktfläche ausgerichtet ist, da die Leitkurve im montierten Zustand des Messaufnehmers mit der Leitkurve des Behältnisses fluchtet. Somit ist die Längsachse der Sensorkamer auch zur Leitkurve des Behältnisses gewinkelt, was einen größeren Abstand zwischen Modulbasikörper und Behälterwand ermöglicht. Hierdurch wird die Handhabung des Messaufnehmers erleichtert, insbesondere dann, wenn eine Steckverbinderkupplung oder andere Bedienelemente am Modulbasiskörper angeordnet sind.

In einer Weiterbildung der Erfindung weist die Kontaktfläche die Form eines Abschnitts einer Zylindermantelfläche auf, wobei die Leitkurve eine Zylinderachse zur Zylindermantelfläche bildet.

In einer Weiterbildung der Erfindung weist das Koppelelement weiterhin einen Schaft auf, welcher aus dem Grundkörper herausreicht, wobei die Sensorkammer durch den Schaft verläuft, wobei der Schaft insbesondere mittels Presspassung oder stoffschlüssig mit dem Grundkörper verbunden ist.

In einer Weiterbildung der Erfindung ist die Sensorkammer in ersten Endabschnitt geschlossen, wobei die Sensorkammer von einem Punkt minimalen Abstands der Kontaktfläche zur Längsachse der Sensorkammer sich nicht mehr als acht, Durchmesser der Sensorkammer am Punkt minimalen Abstands in Richtung des Endbereichs erstreckt.

In einer Weiterbildung der Erfindung weist die Kontaktfläche eine Öffnung zur Sensorkammer (10) aufweist, wobei das Sensorelement bezogen auf die Längsachse der Sensorkammer im Bereich der Öffnung angeordnet ist.

In einer Weiterbildung der Erfindung ist das Sensorelement mit einer Vergussmaße fixiert ist, wobei insbesondere die Vergussmasse die Öffnung verschließt und vorzugsweise eine Oberflächenkontur aufweist, welche der Kontur der Kontaktfläche (9) in der Umgebung der Öffnung folgt.

In einer Weiterbildung der Erfindung umfasst der mindestens eine Wärmebrückenkörper mindestens zwei elektrische Leitungen, die an das Sensorelement angeschlossen ist,
wobei der Modulbasiskörper einen insbesondere metallischen Ringkörper und einen elektrischen Isolatorkörper umfasst,
wobei der Ringkörper den elektrischen Isolatorkörper stoffschlüssig umgibt,
wobei die mindestens zwei elektrischen Leitungen mit dem elektrischen Isolatorkörper stoffschlüssig verbunden sind, und
wobei der Ringkörper mit der Wand der Sensorkammer stoffschlüssig verbunden ist.

In einer Weiterbildung der Erfindung umfasst der mindestens eine Wärmebrückenkörper mindestens eine zylindrische Hülse, die in die Sensorkammer eingesetzt ist, wobei das Sensorelement in der Hülse angeordnet ist, wobei die Hülse stoffschlüssig mit dem Modulbasiskörper verbunden ist.

In einer Ausgestaltung der Erdfindung ist die Hülse mittels Schweißens, Lötens, Klebens und/oder Vergießens mit dem Modulbasiskörper verbunden.

In einer Ausgestaltung dieser Weiterbildung der Erfindung sind elektrische Leitungen in der Hülse geführt, die das Sensorelement kontaktieren und sich vom Sensorelement bis zum Modulbasiskörper erstrecken.

In einer Weiterbildung der Erfindung ist im Bereich der Kontaktfläche eine Einheit, umfassend zumindest teilweise ein Material mit anisotroper Wärmeleitfähigkeit angeordnet, vorzugsweise ein zumindest teilweise Kohlenstoff enthaltendes Material, insbesondere Graphit oder hexagonales Bornitrid, oder der Grundkörper besteht in einem der Kontaktfläche zugewandten Bereich aus dem Material mit anisotroper Wärmeleitfähigkeit.

In einer Weiterbildung der Erfindung ist in einem der Kontaktfläche und der Sensorkammer abgewandten Bereich des Grundkörpers eine thermische Isolation aus einem thermisch isolierenden Material angeordnet, welche den Grundkörper zumindest teilweise umgibt, oder wobei der Grundkörper in dem Bereich aus dem thermisch isolierenden Material besteht, wobei das thermisch geringere thermische isolierende Material eine mindestens um einen Faktor vier, insbesondere mindestens um einen Faktor 8 geringere Thermische Leitfähigkeit als das Material des Grundkörpers im Bereich der Kontaktfläche aufweist..

In einer Weiterbildung der Erfindung ist der Grundkörper aus zumindest zwei Komponenten, insbesondere in Form einer geschichteten Struktur, aufgebaut.

In einer Weiterbildung der Erfindung umfasst der Messaufnehmer Befestigungsmittel zur Befestigung des Grundkörpers an dem Behältnis. Beispielsweise können die Befestigungsmittel Spannbänder, oder Mittel zur Herstellung einer Klemmverschraubung, einer Schraubverbindung, einer Federverbindung oder ähnliches umfassen.

In einer Weiterbildung der Erfindung weist der Grundkörper des Koppelelements zumindest teilweise einen gesinterten Werkstoff oder einen Verbundwerkstoff auf.

In einer Weiterbildung der Erfindung ist das Koppelement einstückig ausgestaltet ist und insbesondere mittels eines generativen Fertigungsverfahrens, vorzugsweise mittels eines 3D-Druckverfahrens, hergestellt ist, oder wobei das Koppelement zumindest zwei, insbesondere voneinander separat gefertigte, Koppel-Komponenten aufweist.

In einer Weiterbildung der Erfindung umfasst der Messaufnehmer mindestens eine Komponente aus einer Liste von Komponenten, die umfasst: eine Steckverbinderkupplung; eine Vorortelektronik zum Treiben des Sensorelements und/oder zum Aufbereiten von Primärsignalen des Sensorelements, wobei die Komponente fest mit dem Modulbasiskörper verbunden ist, und insbesondere in dem Modulbasiskörper angeordnet ist.

Die erfindungsgemäße Messstelle umfasst einen erfindungsgemäßen Messaufnehmer und ein Behältnis zum Enthalten eines Mediums dessen thermische Prozessgröße mit dem Messaufnehmer zu bestimmen ist,
wobei die Kontaktfläche an einem zu ihr komplementären Oberflächenabschnitt des Behältnisses anliegt, wobei insbesondere die Leitkurve der Kontaktfläche mit einer Leitkurve des Oberflächenabschnitts zusammenfällt.

In einer Weiterbildung der Erfindung umfasst das Behältnis einen Rohrleitungsabschnitt zum Führen des Mediums, wobei der Oberflächenabschnitt in dem Rohrleitungsabschnitt ausgebildet ist.

Eine Ausgestaltung beinhaltet, dass die Messstelle zumindest ein Referenzelement zur in situ Kalibrierung und/oder Validierung zumindest des Messaufnehmers umfasst, welches an der äußeren Wandung des Behältnisses befestigt ist, und welches Referenzelement zumindest teilweise aus zumindest einem Material besteht, für welches Material im zur Kalibrierung des Messaufnehmers relevanten Temperaturbereich zumindest ein Phasenübergang bei zumindest einer vorgegebenen Phasenübergangstemperatur auftritt, für welchen Phasenübergang das Material in der festen Phase verbleibt, wie in EP 2 612 122 B1 beschrieben ist.

Noch eine Ausgestaltung beinhaltet, dass die Kontaktfläche zumindest teilweise aus einem verformbaren, insbesondere flexiblen oder duktilen, Material besteht, welches derart ausgestaltet ist, dass es an eine Kontur der äußeren Wandung des Behältnisses anpassbar ist. Die Kontaktfläche ist entsprechend an die Oberfläche der Wandung des Behältnisses anpassbar. Dies hat den Vorteil, dass geringe Nennweitenunterschiede, Formabweichungen und/oder Unebenheiten der Oberfläche der jeweiligen Wandung des Behältnisses durch das Koppelelement ausgeglichen werden können.

Die erfindungsgemäßen Messaufnehmern bzw. Messstellen können insbesondere zur Temperaturmessung ausgestaltet sein, die Erfindung umfasst aber auch Messaufnehmer bzw. Messstellen zur Durchflussmessung. In diesem Fall umfasst der Messaufnehmer zudem ein Heizelement, welches zum Heizen des Mediums durch eine Behälterwand wobei das Heizelement mittels eines Koppelelements befestigbar, ist. Mittels des Heizelements kann das Sensorelement und ein das Sensorelement umgebender Bereich auf eine vorgebbare Temperatur geheizt werden. Unter den Begriff Durchfluss fallen im Rahmen der vorliegenden Erfindung sowohl ein Volumendurchfluss als auch ein Massendurchfluss des Mediums. Ebenso kann eine Durchflussgeschwindigkeit oder Durchflussrate des Mediums ermittelt werden.

Beispielsweise kann der Durchfluss auf zwei unterschiedliche Arten bestimmt werden. Gemäß einem ersten Messprinzip wird ein Sensorelement derart beheizt, dass seine Temperatur im Wesentlichen konstant bleibt. Bei bekannten, und zumindest zeitweise konstanten Mediumseigenschaften, wie der Mediumstemperatur, dessen Dichte oder auch Zusammensetzung, kann anhand der zum Halten der Temperatur auf den konstanten Wert notwendigen Heizleistung der Massedurchfluss des Mediums durch die Rohrleitung ermittelt werden. Unter der Mediumstemperatur sei dabei jene Temperatur verstanden, welche das Medium ohne einen zusätzlichen Wärmeeintrag eines Heizelements aufweist. Bei dem zweiten Messprinzip wird dagegen das Heizelement mit konstanter Heizleistung betrieben und die Temperatur des Mediums stromabwärts des Heizelements gemessen. In diesem Falle gibt die gemessene Temperatur des Mediums Aufschluss über den Massedurchfluss. Darüber hinaus sind aber auch noch andere Messprinzipien bekannt geworden, beispielsweise sogenannte transiente Verfahren, bei welchen die Heizleistung oder die Temperatur moduliert werden.

Das Heizelement kann beispielsweise in Form einer Widerstandsheizung ausgeführt sein, welche über die Umsetzung von ihnen zugeführter elektrischer Leistung, z. B. in Folge einer erhöhten Stromzufuhr, erwärmt werden.

Anhand der nachfolgenden Figuren wird die Erfindung näher erläutert. Es zeigt:
Fig. 1: einen Messaufnehmer zur nicht invasiven Temperaturmessung nach Stand der Technik;
Fign. 2a-b: schematische Aufsichten auf Ausgestaltungen einteiliger Koppelelemente erfindungsgemäßer Messaufnehmer an einer Rohrleitung;
Fign. 3c-d: schematische Querschnitte von Ausgestaltungen einteiliger Koppelelemente erfindungsgemäßer Messaufnehmer an einer Rohrleitung;

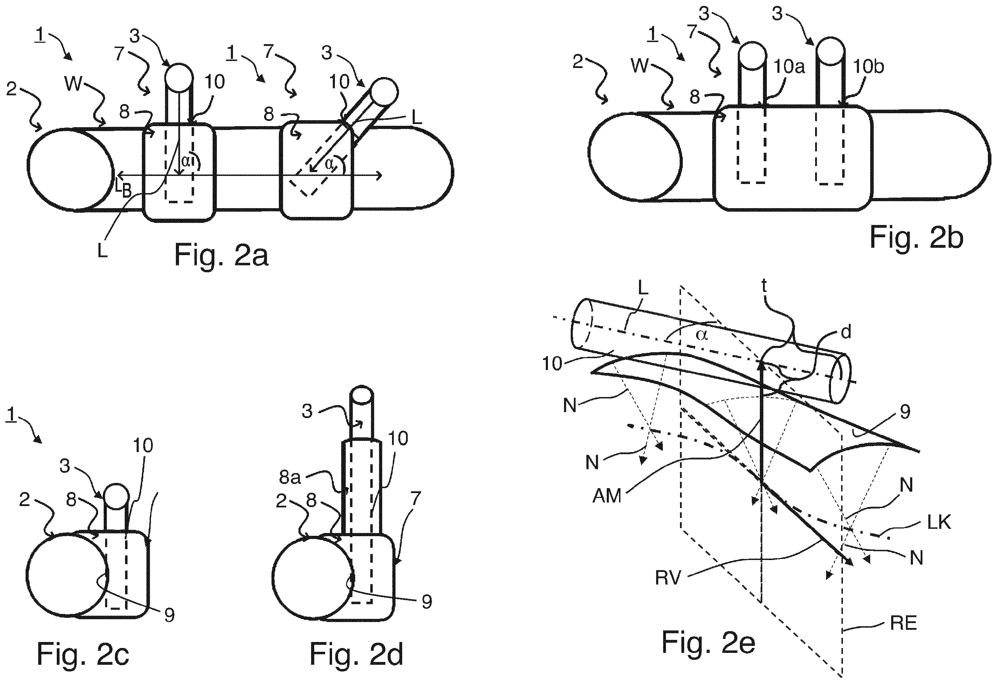

Fig. 2e: eine Skizze zur Erläuterung geometrischer Eigenschaften von Koppelelementen erfindungsgemäßer Messaufnehmer; und

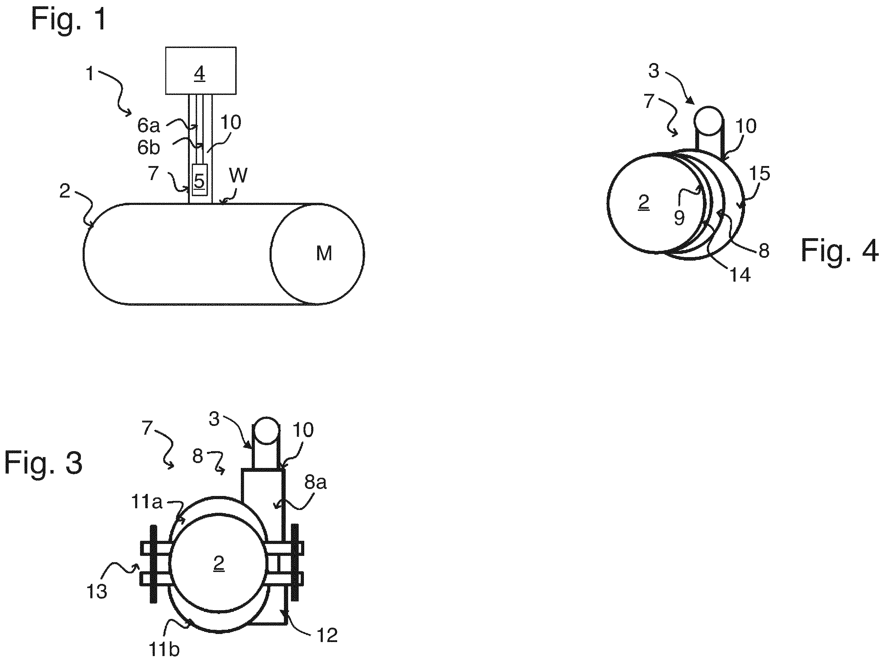

Fig. 3: eine schematische Darstellung einer Ausgestaltung eines erfindungsgemäßen Messaufnehmers mit einem mehrteiligen Koppelelement mit Befestigungsmitteln an einer Rohrleitung;
Fig. 4: eine schematische Darstellung eines Koppelelements erfindungsgemäßer Messaufnehmer mit einer thermischen Isolation;

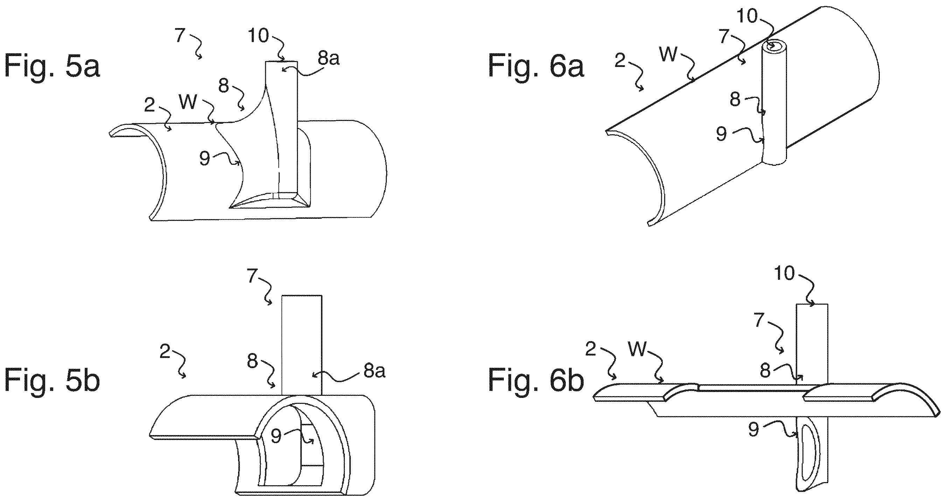

Fign. 5a-b: eine erste Ausgestaltung eines einstückig hergestellten Koppelelements eines erfindungsgemäßen Messaufnehmers;
Fign. 6a-b: eine zweite Ausgestaltung eines einstückig hergestellten Koppelelements; und

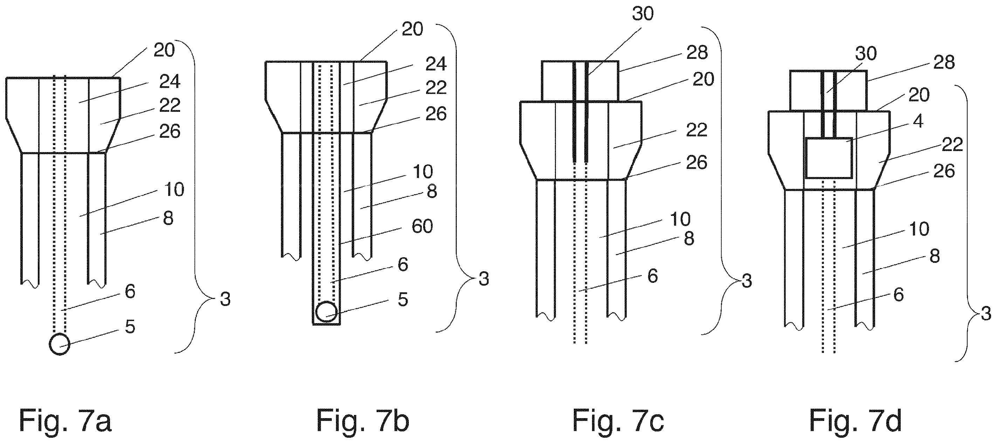

Fign. 7a-d: Einzelheiten zur Montage des Sensormoduls in einem Koppelelement eines erfindungsgemäßen Messaufnehmers.

In den Figuren sind gleiche Elemente jeweils mit demselben Bezugszeichen versehen. Die Ausgestaltungen aus den verschiedenen Figuren sind ferner beliebig miteinander kombinierbar. Zudem betreffen zwar alle Figuren Behältnisse in Form von Rohrleitungen und Messaufnehmern zum Ermitteln einer Medientemperatur, jedoch ist die vorliegende Erfindung keineswegs auf Rohrleitungen oder die Temperaturmessung beschränkt. Vielmehr lassen sich die jeweiligen Überlegungen ohne Weiteres auf andere Arten von Behältnissen und Messaufnehmern übertragen.

In Fig.1 ist eine schematische Abbildung eines Messaufnehmers 1 gemäß dem Stand der Technik mit einem Koppelelement 7 einem Sensorelement 10 und einer Elektronik 4 gezeigt. Der Messaufnehmer 1 dient der Erfassung der Temperatur T eines Mediums M, welches sich in einem Behältnis 2, hier in Form einer Rohrleitung, befindet. Zu diesem Zweck ragt das Thermometer 1 nicht in die Rohrleitung 2 hinein, sondern ist vielmehr zur nicht invasiven Temperaturbestimmung von außen auf eine Wandung W der Rohrleitung 2 aufgesetzt.

Das Koppelelement 7 enthält eine Sensorkammer 10, in der das Sensorelement 5 in Form eines Temperatursensors, welcher ein Widerstandselement umfasst, angeordnet ist. Das Sensorelement 5 ist über die Anschlussleitungen 6a, 6b elektrisch kontaktiert und mit der Elektronik 4 verbunden. Während der gezeigte Messaufnehmer 1 in kompakter Bauweise mit integrierter Elektronik 4 ausgeführt ist, kann bei anderen Messaufnehmern 1 die Elektronik 4 auch separat von dem Messeinsatz 3 angeordnet sein. Wie bereits dargelegt, hängt die Messgenauigkeit eines solchen Messaufnehmers 1 in hohem Maße von den jeweils verwendeten Materialien und von den jeweiligen, insbesondere thermischen, Kontaktierungen, insbesondere im Bereich des Temperatursensors, ab. Der Temperatursensor steht mittelbar, d.h. über das Koppelelement 7 und über die Wandung W des Behältnisses 2, mit dem Medium M in thermischem Kontakt. Eine große Rolle spielt in diesem Zusammenhang auch eine Wärmeableitung vom Koppelelement 7 an die Umgebung, welche für einen unerwünschten Temperaturgradienten im Bereich des Temperatursensors 5 führen kann. Um diesen Problematiken geeignet zu begegnen, wird im Rahmen der vorliegenden Erfindung eine alternative Ausgestaltung für eine nicht invasive Bestimmung einer Prozessgröße, mittels des erfindungsgemäßen Messaufnehmers 1 vorgeschlagen, wie in den Zeichnungen der Fign. 2 ff für einige beispielhafte Ausgestaltungen dargestellt ist.

Die erfindungsgemäßen Messaufnehmer 1 weisen Koppelelemente 7 auf, wie in Fig. 2a bis 2d dargestellt. Ein Koppelelement 7 weist jeweils einen Grundkörper 8 mit einer Kontaktfläche 9 auf, mittels welcher der Grundkörper 8 flächig und insbesondere passgenau an eine Wandung W eines Behältnisses 2 anlegbar ist. Die Kontaktfläche 9 ist vorzugsweise korrespondierend zu einer Oberfläche der Wandung W des Behältnisses 2 ausgestaltet, beispielsweise zylinderschalenförmig. Das Koppelelement 7 weist ferner eine Sensorkammer 10 auf, die beispielsweise durch eine Bohrung in den Grundkörper 8 und oder in einen mit diesem verbundenen Schaft 8a präpariert sein kann, und deren Position in den Zeichnungen durch eine gestrichelte Linie angedeutet ist. In die Sensorkammer 10 ist ein Sensorelement zur Temperaturmessung mittels eines Sensormoduls 3 eingebracht. Einzelheiten dazu werden weiter unten näher erläutert. Eine Längsachse L der zumindest abschnittsweise zylindrischen Sensorkammer 10 windschief zu einer Lengsachse L_{B} des Behältnisses 2.

Die Ausrichtung der Sensorkammer ohne Bezugnahme auf das Behältnis wird nun unter Bezugnahme auf Fig. 2e erläutert. Wie erwähnt, umfasst das Koppelelement 7 eine Kontaktfläche 9, wobei eine Längsachse L der Sensorkammer 10 einen Abstand d zur Kontaktfläche 9 aufweist, wobei der Abstand d in der Darstellung nicht mehr als zwei Radien beträgt. Die Kontaktfläche (9) weist zudem mehrere Normalenvektoren (N) auf, deren Schnittpunkte eine Leitkurve (LK) definieren. Wenn die Kontaktfläche beispielsweise die Form eines Zylinderschalenabschnitts aufweist, ist die resultierende Leitkurve die zugehörige Zylinderachse. In der Skizze in Fig. 2e ist jedoch ein verallgemeinerter Fall dargestellt. Ein minimaler Abstandsvektor (AM) ist zwischen der Leitkurve (LK) und der Längsachse (L) der Sensorkammer (10) gegeben, wobei der Abstandsvektor (AM) und ein Richtungsvektor (RV) der Leitkurve (LK) am Schnittpunkt der Leitkurve (LK) mit dem Abstandsvektor (AM) eine Referenzebene (RE) aufspannen, zu welcher die Längsachse (L) der Sensorkammer (10) einen Winkel (α) von nicht weniger als 25°, beispielsweise nicht weniger als 60° und insbesondere nicht weniger als 80° aufweist.

In Fig. 2a ist links eine erste Ausgestaltung eines Koppelelements 7 eines erfindungsgemäßen Messaufnehmers 1 dargestellt, bei welchem ein Winkel α zwischen der Längsachse L_{K} der Sensorkammer 10 und einer Längsachse L_{B} der Rohrleitung 2 α=90° beträgt. Dies wäre hier auch der Winkel zwischen der Referenzebene und der Längsachse L der Sensorkammer 10. Dagegen ist bei dem rechts dargestellten Koppelelement 7 α=45°. Es ist auch denkbar, dass das Koppelelement 7 zwei Bohrungen 10a und 10b aufweist, welche jeweils zur Aufnahme eines Sensormoduls 3a, 3b dienen, wie in Fig. 2b illustriert. Im Falle mehrerer Bohrungen 10a und 10b können die jeweiligen Winkel α jeweils gleich sein, wie im Falle der Fig. 2b, oder auch unterschiedlich.

Für die Ausgestaltung des Grundkörpers 8 sind verschiedene Varianten denkbar, wie beispielsweise in den Zeichnungen Fig. 2c-d skizziert. Bei der Ausgestaltung gemäß Fig. 2c handelt es sich um einen massiven Grundkörper 8, der insbesondere Vorteile hinsichtlich einer thermischen Isolation gegenüber einer Umgebung des Koppelelements 7 und Sensormoduls 3 bringen kann. Zudem ist eine derartige Ausgestaltung typischerweise mechanisch robuster. Bei der Ausgestaltung gemäß Fig. 2d umfasst das Koppelelement 7 zusätzlich einen Schaft 8a, wobei die Sensorkammer 10 zur Aufnahme des Sensormoduls 3 zumindest abschnittsweise durch den Schaft 8a verläuft. Der Schaft 8a hat verschiedene Funktionen, insbesondere dient er einer verbesserten Wärmeführung von der Wandung W des Behältnisses 2 zum Sensormodul 3 und zu einer Vergrößerung eines Bereichs mit homogener Temperaturverteilung um das Sensormodul 3 herum. Zudem kann der Schaft 8a zur Verbesserung der thermischen Isolation und/oder der mechanischen Stabilität des Messaufnehmers bzw. des Sensormoduls 3 in der Sensorkammer 10 des Grundkörpers 8 dienen.

In Fig. 3 ist eine Ausgestaltung für mit einem mehrteiligen Koppelelement 7 sowie mit Spannschrauben 13 zur Befestigung skizziert. Der Grundkörper 8 ist zweiteilig und mit Schaft 8a ausgestaltet und weist zwei Koppel-Komponenten in Form von Halbschalen 11a und 11b auf, welche um eine Rohrleitung 2 herum angeordnet sind. Die Sensorkammer 10 verläuft im Bereich beider Halbschalen 11a und 11b und ist in einem Endbereich 12 verschlossen. Es sei darauf verwiesen, dass der Grundkörper 8 in anderen Ausgestaltungen auch mehr als zwei Koppel-Komponenten aufweisen kann, und dass auch im Falle von zwei Koppel-Komponenten diese nicht zwingend in Form von Halbschalen 11a und 11b ausgestaltet sein müssen. Vielmehr sind zahlreiche unterschiedliche Varianten denkbar, welche allesamt unter die vorliegende Erfindung fallen.

In Fig. 4 ist ein Koppelelement 7 mit einer Einheit 14 umfassend ein Material mit anisotroper Wärmeleitfähigkeit sowie einer thermischen Isolation 15 dargestellt. Die Einheit 14 ist in einem dem Behältnis 2 zugewandten Bereich des Grundkörpers 8 angeordnet, während die thermische Isolation 15 in einem dem Behältnis 2 abgewandten Bereich des Grundkörpers angeordnet ist und einer Isolation gegenüber einer Umgebung des Koppelelements bzw. der Messstelle 1 dient.

Eine erste mögliche Ausgestaltung für ein einstückig hergestelltes Koppelelement 7 ist in Fig. 5 illustriert. Das Koppelelement 7 verfügt über einen Grundkörper 8 mit einem (optionalen) Schaft 8a und einer Sensorkammer 10 zur Aufnahme eines Sensormoduls 3. Die Kontaktfläche 9 liegt flächig an der Wandung W des Behältnisses 2 an. Dabei ist die Oberfläche der Kontaktfläche 9 möglichst groß, insbesondere maximal, während eine Ausdehnung des Grundkörpers 8 senkrecht zur Kontaktfläche 9 besonders klein, insbesondere minimal, ist. Dadurch ergibt sich zum einen eine besonders kompakte Bauform. Zudem sorgt eine derartige Ausgestaltung aber auch für einen reduzierten, insbesondere minimierten, Wärmeverlust an die Umgebung. Dieser Effekt kann noch weiter gesteigert werden durch geeignete Maßnahmen bezüglich der Ausgestaltung bzw. des Aufbaus des Grundkörpers 8, beispielsweise hinsichtlich der internen Wärmeleitung, insbesondere kann der Grundkörper 8 derart ausgestaltet sein, dass eine erhöhte Wärmeleitung von der Kontaktfläche 9 zur Sensorkammer 10 bzw. zum Schaft 8a erfolgt.

Während es sich im Falle der Fig. 5a bei dem Grundkörper 8 um einen massiven Körper handelt, handelt es sich bei dem in Fig. 5b dargestellten Grundkörper 8 um einen Hohlkörper. Ein Grundkörper 8 in Form eines Hohlkörpers bietet den zusätzlichen Vorteil, dass ein Sensorelement eines Sensormoduls in direkten Kontakt mit der Wandung W des Behältnisses 2 kommt. Dadurch verringert sich der Abstand zwischen dem Sensorelement 5, welches in dem Messeinsatz 3 angeordnet ist und der Wandung W des Behältnisses 2, zu welcher der Messeinsatz 3 tangential angeordnet ist, woraus wiederum eine weitere Verbesserung der Wärmeleitung vom Medium M zu dem Sensorelement 5 resultiert.

In Fig. 6 ist schließlich eine schaftartige Ausgestaltung des Grundkörpers 8 des Koppelelements 7 dargestellt. Diese Ausgestaltung stellt eine besonders kompakte und einfache Bauform dar. Auch für diese Ausgestaltung ist es sowohl denkbar, einen massiven (Fig. 6a) Grundkörper 8 als auch einen Grundkörper in Form eines Hohlköpers (Fig. 6b) zu verwenden. Neben den beiden Varianten für einen einteiligen Grundkörper 8 aus Fig. 5 und 6 sind zahlreiche weitere mögliche Ausgestaltungen für einen Grundkörper 8 eines erfindungsgemäßen Koppelelements 7 denkbar, welche ebenfalls unter die vorliegende Erfindung fallen. Insbesondere können die in den Figuren Fig. 5 und Fig. 6 gezeigten Ausgestaltungen auch beliebig miteinander kombiniert werden.

Zusammenfassend ist es ein Vorteil der vorliegenden Erfindung, dass ein Standard-Messeinsatz 3, beispielsweise eines Thermometers 1, zur Realisierung eines nicht-invasiven Thermometers 1 verwendet werden kann. Zu diesem Zweck weist das erfindungsgemäße Koppelelement 7 eine Sensorkammer 10 zur Aufnahme des Messeinsatzes 3 auf. Eine Anpassung an die Geometrie des Behältnisses 2 erfolgt vermittels der Kontaktfläche 9 des Koppelelements 7. Im Gegensatz zu anderen, aus dem Stand der Technik bekannten Lösungen, verläuft eine Längsachse L des Messeinsatzes 3 tangential zur Wandung des Behältnisses W, wodurch eine verbesserte Wärmeleitung erreicht werden kann.

Anhand der Fign 7a bis d wird nun erläutert, wie die Sensormodule 3der erfindungsgemäßen Messaufnehmer anzuordnen sind. Die Sensormodule 3 umfassen jeweils einen Modulbasiskörper 3, ein Sensorelement 5 und einen Wärmebrückenkörper 6; 60. Der Begriff des Wärmebrückenkörpers 6; 60 bezeichnet so unterschiedliche Funktionselemente wie elektrische Anschlussleitungen 6 des Sensorelements 5 oder eine dünnwandige metallische Hülse 60, in welcher das Sensorelement angeordnet ist. In thermischer Hinsicht haben die die vorgenannten Funktionselemente die gemeinsame unerwünschte Eigenschaft, dass bei Temperaturgradienten entlang ihrer Längserstreckung Wärme ableiten können, weshalb für sie der Sammelbegriff Wärmebrückenkörper gewählt ist. Wie in Fign. 7a, 7c und 7d dargestellt kann das Sensorelement 5 ohne weitere Ummantelung in der Sensorkammer 10 angeordnet sein, die in dem Grundkörper 8 des Koppelelements gebildet ist. Hierbei befindet sich das Sensorelement im Bereich minimalen Abstands zwischen der Längsachse der Sensorkammer und der Kontaktfläche oder das Sensorelement kann noch über diesen Bereich hinaus weiter in die Sensorkammer hinein in Richtung eines geschlossenen ersten Endabschnitts der Sensorkammer 10 verschoben sein.

Zwischen dem Sensorelement 5 und einer rückseitigen Öffnung in einem zweiten Endabschnitt der Sensorkammer 10 verlaufen die elektrischen Anschlussleitungen 6, mit welchen das Sensorelement 5 kontaktiert ist. Zur Minimierung eines Temperaturgradienten ist der Modulbasiskörper 3, der einen metallischen Ringkörper 22 und einen von ihm stoffschlüssig gehaltenen zentralen Isolatorkörper 24 aufweist, stoffschlüssig mit dem Grundkörper 8 an der rückseitigen Öffnung der Sensorkammer 10 verbunden, wobei der Ringkörper 22 mit dem Grundkörper 8 mit einer Fügestelle 26 gefügt ist. Die Anschlussleitungen 6 sind stoffschlüssig durch den Isolatorkörper 24 geführt. Durch die stoffschlüssige Verbindung sind die Anschlussleitungen in einem solchen Maß thermisch mit dem Grundkörper 8 gekoppelt, dass ein Temperaturgradient entlang der Anschlussleitungen minimiert ist. Der Isolatorkörper kann Glas, Keramik oder ein Polymer mit hinreichender Wärmeleitfähigkeit umfassen.

Wie in Fign. 7b dargestellt kann das Sensorelement 5 auch in einer ummantelnden Hülse 60 in der Sensorkammer 10 angeordnet sein, wobei die Hülse einen metallischen oder keramischen Werkstoff mit hoher Wärmeleitfähigkeit aufweist. Die Hülse 60 weist eine geringere Querschnittsfläche als die Sensorkammer 10 auf. Anschlussleitungen 6 zur Kontaktierung des Sensorelements 5 verlaufen in der Hülse. Hinsichtlich der Längserstreckung der Komponenten des Sensormoduls 3 in der Sensorkammer 10 gelten die Erläuterungen zu den zuvor diskutierten Ausführungsbeispielen entsprechend. Vorliegend ist die Hülse 60 der dominierende Wärmebrückenkörper. Zur Minimierung eines Temperaturgradienten entlang der Hülse 60 ist der Modulbasiskörper 3, der einen metallischen Ringkörper 22 und einen von ihm stoffschlüssig gehaltenen zentralen Isolatorkörper 24 aufweist, stoffschlüssig mit dem Grundkörper 8 an der rückseitigen Öffnung der Sensorkammer 10 verbunden, wobei der Ringkörper 22 mit dem Grundkörper 8 mit einer Fügestelle 26 gefügt ist. Die Hülse 60 ist stoffschlüssig durch den Isolatorkörper 24 geführt. Durch die stoffschlüssige Verbindung ist die Hülse 60 in einem solchen Maß thermisch mit dem Grundkörper 8 gekoppelt, dass ein Temperaturgradient entlang der Anschlussleitungen minimiert ist. Der Isolatorkörper kann Glas, Keramik oder ein Polymer mit hinreichender Wärmeleitfähigkeit umfassen. Insofern als die Anschlussleitungen 6 in der Hülse in einem sehr geringen Querschnitt geführt sind, der wesentlich kleiner ist als der Querschnitt der Sensorkammer, entspricht eine Temperaturverteilung entlang der Anschlussdrähte der Temperaturverteilung entlang der Hülse. Weitere Maßnahmen zur stoffschlüssigen Ankopplung der Anschlussleitungen 6 an den Modulbasiskörper 3 sind daher nicht erforderlich. Ggf. kann die Hülse noch mit einem Keramikpulver zur gleichmäßigen Temperierung der Anschlussleitung aufgefüllt sein.

Wie in Fign. 7c und 7d dargestellt kann der Modulbasiskörper zudem eine Steckverbinderkupplung 28 mit Anschlusskontakten 30 zum Anschluss einer Versorgungs- und Datenleitung aufweisen. Ggf. kann in dem Modulbasiskörper 3 eine Vorortelektronik zur Vorverarbeitung und Digitalisierung von Primärsignalen des Sensorelements 5 enthalten sein.

## Patentansprüche

1. Messaufnehmer (1), zum Ermitteln einer thermischen Messgröße, insbesondere einer Temperatur (T), oder einer Massedurchflussrate eines Mediums (M) in einem Behältnis (2) unter Kontaktierung des Behältnisses (2), umfassend
ein Koppelelement (7); und
ein Sensormodul (3);
wobei das Koppelelement (7) umfasst:
einen Grundkörper (8) mit einer Kontaktfläche (9), zum Kontaktieren des Behältnisses (2),
wobei das Koppelelement (7) eine zumindest abschnittsweise zylindrische Sensorkammer (10), zur Aufnahme eines Sensorelements (5) zur Bestimmung und/oder Überwachung der Prozessgröße aufweist,
wobei die Sensorkammer (10) zumindest abschnittsweise in dem Grundkörper (8) angeordnet ist,
wobei eine Längsachse der Sensorkammer (10) nicht mehr als vier Radien, beispielsweise nicht mehr als zwei Radien, insbesondere nicht mehr als einen Radius der Sensorkammer (10) von der Kontaktfläche beabstandet ist, wobei
die Kontaktfläche (9) mehrere Normalenvektoren (N) aufweist, deren Schnittpunkte eine Leitkurve (LK) definieren, wobei ein minimaler Abstandsvektor (AM) zwischen der Leitkurve (LK) und der Längsachse (L) der Sensorkammer (10) gegeben ist, wobei der Abstandsvektor (AM) und ein Richtungsvektor (RV) der Leitkurve (LK) am Schnittpunkt der Leitkurve (LK) mit dem Abstandsvektor (AM) eine Referenzebene (RE) aufspannen, zu welcher die Längsachse (L) der Sensorkammer (10) einen Winkel (α) von nicht weniger als 25°, beispielsweise nicht weniger als 60° und insbesondere nicht weniger als 80° aufweist;
wobei das Sensormodul (3) umfasst:
zumindest ein Sensorelement (5) zum Erfassen einer Temperatur; mindestens einen Modulbasiskörper (3); und
mindestens einen Wärmebrückenkörper (6);
wobei das Sensorelement i (5) in einem ersten Endabschnitt der Sensorkammer (10) angeordnet ist,
wobei der Modulbasiskörper (3) an einem dem ersten Endabschnitt abgewandten, zweiten Endabschnitt der Sensorkammer (10) angeordnet ist,
wobei der mindestens eine Wärmebrückenkörper : (6) sich in der Sensorkammer (10) zumindest über einen Abschnitt erstreckt, der zwischen dem Sensorelement (5) und dem Modulbasiskörper (3) verläuft,
wobei entlang der Längsachse der Sensorkammer (10) Querschnitte der Sensorkammer (10) größer sind als die dazu jeweils koplanaren Querschnitte des mindestens einen Wärmebrückenkörpers (6);
wobei der mindestens eine Wärmebrückenkörper (6) stoffschlüssig mit dem Modulbasiskörper (3) verbunden ist, und
wobei der Modulbasiskörper (3) in einem dem Sensorelement (5) abgewandten Endabschnitt der Sensorkammer (10) mit der Wand der Sensorkammer (10) stoffschlüssig verbunden ist.

2. Messaufnehmer (1) nach Anspruch 1,
wobei die Kontaktfläche (9) die Form eines Abschnitts einer Zylindermantelfläche aufweist, und wobei die Leitkurve eine Zylinderachse zur Zylindermantelfläche bildet.

3. Messaufnehmer (1) nach Anspruch 1 oder 2,
wobei das Koppelelement (7) weiterhin einen Schaft (8a) aufweist, welcher aus dem Grundkörper (8) herausragt wobei die Sensorkammer (10) durch den Schaft (8a) verläuft,
wobei der Schaft (8a) insbesondere mittels Presspassung oder stoffschlüssig mit dem Grundkörper (8) verbunden ist.

4. Messaufnehmer (1) nach zumindest einem der vorherigen Ansprüche,
wobei die Sensorkammer (10) am ersten Endabschnitt (12) geschlossen ist, wobei die Sensorkammer (10) von einem Punkt minimalen Abstands der Kontaktfläche zur Längsachse der Sensorkammer (10) sich nicht mehr als acht, Durchmesser der Sensorkammer (10) am Punkt minimalen Abstands in Richtung des Endbereichs erstreckt.

5. Messaufnehmer (1) nach zumindest einem der vorherigen Ansprüche,
wobei die Kontaktfläche (9) eine Öffnung zur Sensorkammer (10) aufweist, wobei das Sensorelement (5) bezogen auf die Längsachse der Sensorkammer (10) im Bereich der Öffnung angeordnet ist.

6. Messaufnehmer (1) nach Anspruch 5,
wobei das Sensorelement (5) mit einer Vergussmaße fixiert ist, wobei insbesondere die Vergussmasse die Öffnung ausfüllt, und vorzugsweise eine Oberflächenkontur aufweist, welche der Kontur der Kontaktfläche (9) in der Umgebung der Öffnung folgt.

7. Messaufnehmer (1) nach zumindest einem der vorherigen Ansprüche,
wobei der mindestens eine Wärmebrückenkörper (6) mindestens zwei elektrische Leitungen umfasst, die an das Sensorelement (5) angeschlossen sind,
wobei der Modulbasiskörper (3) einen insbesondere metallischen Ringkörper (22) und einen Isolatorkörper (24) umfasst,
wobei der Ringkörper (22) den Isolatorkörper (24) stoffschlüssig umgibt,
wobei die mindestens zwei elektrischen Leitungen mit dem Isolatorkörper (24) stoffschlüssig verbunden sind, und
wobei der Ringkörper (22) mit der Wand der Sensorkammer (10) stoffschlüssig verbunden ist.

8. Messaufnehmer (1) nach zumindest einem der Ansprüche 1 bis 5,
wobei der mindestens eine Wärmebrückenkörper (6) mindestens eine zylindrische Hülse (60) umfasst, die in die Sensorkammer (10) eingesetzt ist, wobei das Sensorelement (5) in der Hülse (60) angeordnet ist,
wobei die Hülse (60) stoffschlüssig mit dem Modulbasiskörper (3) verbunden ist.

9. Messaufnehmer (1) nach zumindest einem der vorherigen Ansprüche,
wobei im Bereich der Kontaktfläche (9) eine Einheit (14) umfassend zumindest teilweise ein Material mit anisotroper Wärmeleitfähigkeit, vorzugsweise ein zumindest teilweise Kohlenstoff enthaltendes Material, insbesondere Graphit oder hexagonales Bornitrid, angeordnet ist, oder wobei der Grundkörper (8) in einem der Kontaktfläche (9) zugewandten Bereich aus dem Material mit anisotroper Wärmeleitfähigkeit besteht.

10. Messaufnehmer (1) nach zumindest einem der vorherigen Ansprüche,
wobei in einem der Kontaktfläche (9) und der Sensorkammer (10) abgewandten Bereich des Grundkörpers (8) eine thermische Isolation (15) aus einem thermisch isolierenden Material angeordnet ist, welche den Grundkörper (8) zumindest teilweise umgibt, oder wobei der Grundkörper (8) in dem Bereich aus dem thermisch isolierenden Material besteht, wobei das thermisch geringere thermische isolierende Material eine mindestens um einen Faktor vier, insbesondere mindestens um einen Faktor 8 geringere Thermische Leitfähigkeit als das Material des Grundkörpers (8) im Bereich der Kontaktfläche aufweist.

11. Messaufnehmer (1) nach zumindest einem der vorherigen Ansprüche,
wobei der Grundkörper (8) aus zumindest zwei Komponenten, insbesondere in Form einer geschichteten Struktur, aufgebaut ist.

12. Messaufnehmer (1) nach zumindest einem der vorherigen Ansprüche,
umfassend Befestigungsmittel (13) zur Befestigung des Grundkörpers (8) an dem Behältnis (2).

13. Messaufnehmer (1) nach zumindest einem der vorherigen Ansprüche,
wobei der Grundkörper (8) des Koppelelements (7) zumindest teilweise einen gesinterten Werkstoff oder einen Verbundwerkstoff aufweist.

14. Messaufnehmer (1), nach einem der vorhergehenden Ansprüche
wobei das Koppelement (7) einstückig ausgestaltet ist und insbesondere mittels eines generativen Fertigungsverfahrens, vorzugsweise mittels eines 3D-Druckverfahrens, hergestellt ist, oder wobei das Koppelement (7) zumindest zwei, insbesondere voneinander separat gefertigte, Koppel-Komponenten (11a, 11b) aufweist.

15. Messaufnehmer (1), nach einem der vorhergehenden Ansprüche, weiterhin umfassend:
mindestens eine Komponente aus einer Liste von Komponenten, die umfasst:
eine Steckverbinderkupplung; eine Vorortelektronik zum Treiben des Sensorelements (5) und/oder zum Aufbereiten von Primärsignalen des Sensorelements (5), wobei die Komponente fest mit dem Modulbasiskörpe (3) verbunden ist, und insbesondere in dem Modulbasiskörper (3) angeordnet ist.

16. Messstelle, umfassend: einen Messaufnehmer (1) nach einem der vorhergehenden Ansprüche und ein Behältnis (2) zum Enthalten eines Mediums (M) dessen Prozessgröße mit dem Messaufnehmer (100) zu bestimmen ist,
wobei die Kontaktfläche (9) an einem zu ihr komplementären Oberflächenabschnitt (O) des Behältnisses (2) anliegt,
wobei insbesondere die Leitachse der Kontaktfläche (9) mit einer Leitachse des Oberflächenabschnitts zusammenfällt.

17. Messstelle nach Anspruch 16, wobei das Behältnis (2) einen Rohrleitungsabschnitt zum Führen des Mediums (M) umfasst, wobei der Oberflächenabschnitt (O) in dem Rohrleitungsabschnitt ausgebildet ist.

## Claims

1. A measuring transducer (1) for determining a thermal measured variable, in particular a temperature (T), or a mass flow rate of a medium (M) in a container (2) with contacting of the container (2), comprising
A coupling element; and
a sensor module (3);
wherein the coupling element (7) comprises:
A basic body (8) with a contact surface (9) for contacting the container (2),
wherein the coupling element (7) has a sensor chamber (10), which is cylindrical at least in sections, for mounting a sensor element (5) for determining and/or monitoring the process variable,
wherein the sensor chamber (10) is arranged in the basic body (8) at least in sections,
wherein a longitudinal axis of the sensor chamber (10) is positioned at a distance from the contact surface, which is equal to no more than four radii, for example no more than two radii, in particular no more than one radius of the sensor chamber (10),
wherein the contact surface (9) has several normal vectors (N) whose points of intersection define a directrix (LK),
wherein a minimum distance vector (AM) is present between the directrix (LK) and the longitudinal axis (L) of the sensor chamber (10),
wherein the distance vector (AM) and a direction vector (RV) of the directrix (LK) create a reference plane (RE) at the point where the directrix (LK) intersects the distance vector (AM), relative to which the longitudinal axis (L) of the sensor chamber (10) has an angle (α) of no less than 25°, for example no less than 60° and in particular no less than 80°;
wherein the sensor module (3) comprises:
At least one sensor element (5) for detecting a temperature of at least one module basic body (3); and
at least one thermal bridge body (6);
wherein the sensor element (5) is arranged in a first end section of the sensor chamber (10),
wherein the module basic body (3) is arranged at a second end section of the sensor chamber (10) facing away from the first end section,
wherein the at least one thermal bridge body (6) extends in the sensor chamber (10) at least over one section which runs between the sensor element (5) and the module basic body (3),
wherein cross-sections of the sensor chamber (10) along the longitudinal axis of the sensor chamber (10) are larger than the respective coplanar cross-sections of the at least one thermal bridge body (6);
wherein the at least one thermal bridge body (6) is connected to the module basic body (3) by means of a permanent material bond, and
wherein the module basic body (3) is connected to the wall of the sensor chamber (10) by means of a permanent material bond in an end section of the sensor chamber (10) facing away from the sensor element (5).

2. The measuring transducer (1) as claimed in claim 1,
wherein the contact surface (9) has the shape of a section of a cylindrical lateral surface, and wherein the directrix forms a cylinder axis relative to the cylindrical lateral surface.

3. The measuring transducer as claimed in claim 1 or 2,
wherein the coupling element (7) also has a shaft (8a) which protrudes from the basic body (8),
wherein the sensor chamber (10) extends through the shaft (8a),
wherein the shaft (8a) is connected to the basic body (8), in particular by means of a press fit or a permanent material bond.

4. The measuring transducer as claimed in at least one of the preceding claims,
wherein the sensor chamber (10) is closed at the first end section (12),
wherein, from a point where the contact surface is closest to the longitudinal axis of the sensor chamber (10), the sensor chamber (10) extends no more than eight times the diameter of the sensor chamber (10) toward the end section at the closest point.

5. The measuring transducer (1) as claimed in at least one of the preceding claims,
wherein the contact surface (9) has an opening toward the sensor chamber (10),
wherein the sensor element (5) is arranged in the area of the opening relative to the longitudinal axis of the sensor chamber (10).

6. The measuring transducer (1) as claimed in claim 5,
wherein the sensor element (5) is secured in place with a compound,
wherein, in particular, the compound fills the opening and preferably has a surface contour which follows the contour of the contact surface (9) around the opening.

7. The measuring transducer (1) as claimed in at least one of the preceding claims,
wherein the at least one thermal bridge body (6) comprises at least two electrical lines which are connected to the sensor element (5),
wherein the module basic body (3) comprises an in particular metal annular body (22) and an insulator body (24),
wherein the annular body (22) surrounds the insulator body (24), creating a permanent material bond,
wherein the at least two electrical lines are connected to the insulator body (24) by means of a permanent material body, and
wherein the annular body (22) is connected to the wall of the sensor chamber (10) by means of a permanent material bond.

8. The measuring transducer (1) as claimed in at least one of claims 1 to 5,
wherein the at least one thermal bridge body (6) comprises at least one cylindrical sleeve (60) which is inserted into the sensor chamber (10),
wherein the sensor element (5) is arranged in the sleeve (60),
wherein the sleeve (60) is connected to the module basic body (3) by means of a permanent material bond.

9. The measuring transducer (1) as claimed in at least one of the preceding claims,
wherein a unit (14) comprised at least partially of a material with anisotropic thermal conductivity, preferably a material at least partially containing carbon, in particular graphite or hexagonal boron nitride, is arranged in the area of the contact surface (9), or wherein the basic body (8) consists of the material with anisotropic thermal conductivity in an area facing toward the contact surface (9).

10. The measuring transducer (1) as claimed in at least one of the preceding claims,
wherein thermal insulation (15) consisting of a thermally insulating material is arranged in an area of the basic body (8) facing away from the contact surface (9) and the sensor chamber (10), which at least partially surrounds the basic body (8), or
wherein the basic body (8) consists of the thermally insulating material in this area,
wherein the less thermally insulating material has a thermal conductivity which is lower than that of the material of the basic body (8) in the area of the contact surface by at least a factor of four, in particular by at least a factor of eight.

11. The measuring transducer (1) as claimed in at least one of the preceding claims,
wherein the basic body (8) is constructed from at least two components, in particular in the form of a layered structure.

12. The measuring transducer (1) as claimed in at least one of the preceding claims, comprising mounting materials (13) for mounting the basic body (8) on the container (2).

13. The measuring transducer (1) as claimed in at least one of the preceding claims,
wherein the basic body (8) of the coupling element (7) contains a sintered material or a composite material, at least partially.

14. The measuring transducer (1) as claimed in one of the preceding claims,
wherein the coupling element (7) is designed as a single part and, in particular, is produced by means of a generative manufacturing process, preferably by means of a 3D printing process, or
wherein the coupling element (7) has at least two coupling components (11a, 11b), in particular ones which are produced separately from each other.

15. The measuring transducer (1) as claimed in one of the preceding claims, further comprising:
At least one component from a list of components, which comprises:
A plug connector coupling;
On-site electronics for driving the sensor element (5) and/or for preparing primary signals from the sensor element (5),
wherein the component is permanently connected to the module basic body (3), and in particular is arranged in the module basic body (3).

16. A measuring point, comprising:
A measuring transducer (1) as claimed in one of the preceding claims and container (2) for housing a medium (M) whose process variable is to be determined using the measuring transducer (100),
wherein the contact surface (9) rests on a surface section (O) of the container (2) which is complementary to it,
wherein, in particular, the master axis of the contact surface (9) coincides with a master axis of the surface section.

17. The measuring point as claimed in claim 16, wherein the container (2) comprises a pipeline section for conducting the medium (M),
wherein the surface section (O) is formed in the pipeline section.

## Revendications

1. Capteur (1) destiné à la détermination d'une grandeur thermique, notamment une température (T), ou un débit massique d'un produit (M) dans un réservoir (2), par contact dudit capteur avec ledit réservoir (2), lequel capteur comprend :
un élément de couplage (7) ; et
un module capteur (3) ;
l'élément de couplage (7) comprenant :
un corps de base (8) avec une surface de contact (9) destinée à entrer en contact avec le réservoir (2),
l'élément de couplage (7) comportant une chambre de capteur (10) au moins partiellement cylindrique, laquelle chambre est conçue pour recevoir un élément capteur (5) destiné à la détermination et/ou à la surveillance de la grandeur process,
la chambre de capteur (10) étant disposée au moins partiellement dans le corps de base (8),
un axe longitudinal de la chambre de capteur (10) étant espacé de la surface de contact d'au plus quatre rayons, par exemple d'au plus deux rayons, et notamment d'au plus un rayon de la chambre de capteur (10), la surface de contact (9) présentant plusieurs vecteurs normaux (N) dont les points d'intersection définissent une courbe directrice (LK), un vecteur de distance minimal (AM) étant établi entre la courbe directrice (LK) et l'axe longitudinal (L) de la chambre de capteur (10), le vecteur de distance (AM) et un vecteur directionnel (RV) de la courbe directrice (LK) présentant, au point d'intersection de la courbe directrice (LK) avec le vecteur de distance (AM), un plan de référence (RE) par rapport auquel l'axe longitudinal (L) de la chambre de capteur (10) forme un angle (α) d'au moins 25°, par exemple d'au moins 60° et notamment d'au moins 80° ;
le module capteur (3) comprenant :
au moins un élément capteur (5) destiné à mesurer une température ;
au moins un corps de base du module (3) ; et
au moins un corps de pont thermique (6) ;
l'élément capteur (5) étant disposé dans une première partie d'extrémité de la chambre de capteur (10),
le corps de base du module (3) étant disposé au niveau d'une deuxième partie d'extrémité de la chambre de capteur (10), laquelle deuxième partie étant située à l'opposé de première partie d'extrémité,
le ou les éléments de pont thermique (6) s'étendant dans la chambre de capteur (10) au moins sur une partie qui s'étend entre l'élément capteur et le corps de base du module (3),
les sections transversales de la chambre de capteur (10) étant plus grandes - le long de l'axe longitudinal de la chambre de capteur (10) - que les sections transversales respectivement coplanaires de l'au moins un corps de pont thermique (6) ;
l'au moins un corps de pont thermique (6) étant relié par adhérence au corps de base du module (3), et
le corps de base du module (3) étant relié par adhérence à la paroi de la chambre de capteur (10), dans une partie d'extrémité de ladite chambre, laquelle partie étant située à l'opposé de l'élément capteur (5).

2. Capteur (1) selon la revendication 1,
pour lequel la surface de contact (9) présente la forme d'une partie de la surface latérale d'un cylindre, et la courbe directrice formant un axe de cylindre par rapport à la surface latérale du cylindre.

3. Capteur (1) selon la revendication 1 ou 2,
pour lequel l'élément de couplage (7) comporte en outre une tige (8a) qui dépasse du corps de base (8), la chambre de capteur (10) s'étendant à travers la tige (8a), la tige (8a) étant reliée au corps de base (8), notamment par ajustement serré ou par adhérence.

4. Capteur (1) selon au moins l'une des revendications précédentes,
pour lequel la chambre de capteur (10) est fermée au niveau de la première partie d'extrémité (12), la chambre de capteur (10) s'étendant, à partir d'un point où la distance entre la surface de contact et l'axe longitudinal de la chambre de capteur (10) est minimale, sur une longueur ne dépassant pas huit fois le diamètre de la chambre de capteur (10) à ce point, en direction de la zone d'extrémité

5. Capteur (1) selon au moins l'une des revendications précédentes,
pour lequel la surface de contact (9) comporte une ouverture donnant sur la chambre de capteur (10), l'élément capteur (5) étant disposé dans la zone de l'ouverture par rapport à l'axe longitudinal de la chambre de capteur (10).

6. Capteur (1) selon la revendication 5,
pour lequel l'élément capteur (5) est fixé à l'aide d'une masse de scellement, laquelle masse de scellement remplit notamment l'ouverture et présentant de préférence un contour de surface qui épouse le contour de la surface de contact (9) au voisinage de l'ouverture.

7. Capteur (1) selon au moins l'une des revendications précédentes,
pour lequel l'au moins un corps de pont thermique (6) comprend au moins deux conducteurs électriques raccordés à l'élément capteur (5)
pour lequel le corps de base du module (3) comprend un corps annulaire (22), notamment métallique, et un corps isolant (24),
le corps annulaire (22) entourant le corps isolant (24) par adhérence,
les au moins deux conducteurs électriques étant reliés au corps isolant (24) par adhérence, et
le corps annulaire (22) étant relié par adhérence à la paroi de la chambre de capteur (10).

8. Capteur (1) selon au moins l'une des revendications 1 à 5,
pour lequel l'au moins un corps de pont thermique (6) comprend au moins un manchon cylindrique (60) inséré dans la chambre de capteur (10), l'élément capteur (5) étant disposé dans le manchon (60),
le manchon (60) étant relié par adhérence au corps de base du module (3).

9. Capteur (1) selon au moins l'une des revendications précédentes,
pour lequel, dans la zone de la surface de contact (9), est disposée une unité (14) comprenant au moins en partie un matériau à conductivité thermique anisotrope, de préférence un matériau contenant au moins en partie du carbone, notamment du graphite ou du nitrure de bore hexagonal, ou le corps de base (8) étant constitué, dans une zone tournée vers la surface de contact (9), du matériau présentant une conductivité thermique anisotrope.

10. Capteur (1) selon au moins l'une des revendications précédentes,
pour lequel une isolation thermique (15) constituée d'un matériau thermiquement isolant est disposée dans une zone du corps de base (8) opposée à la surface de contact (9) et à la chambre de capteur (10), laquelle isolation entoure au moins partiellement le corps de base (8), ou le corps de base (8) étant constitué, dans cette zone, du matériau thermiquement isolant, le matériau thermiquement isolant présentant une conductivité thermique inférieure d'au moins un facteur 4, notamment d'au moins un facteur 8, à celle du matériau du corps de base (8) dans la zone de la surface de contact.

11. Capteur (1) selon au moins l'une des revendications précédentes,
pour lequel le corps de base (8) est constitué d'au moins deux composants, notamment sous la forme d'une structure stratifiée.

12. Capteur (1) selon au moins l'une des revendications précédentes,
lequel capteur comprend des moyens de fixation (13) destinés à fixer le corps de base (8) au réservoir (2).

13. Capteur (1) selon au moins l'une des revendications précédentes,
pour lequel le corps de base (8) de l'élément de couplage (7) est constitué, au moins en partie, d'un matériau fritté ou d'un matériau composite.

14. Capteur (1) selon l'une des revendications précédentes,
pour lequel l'élément de couplage (7) est constitué d'une seule pièce et est notamment fabriqué au moyen d'un procédé de fabrication additive, de préférence au moyen d'un procédé d'impression 3D, ou
pour lequel l'élément de couplage (7) comporte au moins deux composants de couplage (11a, 11b), notamment fabriqués séparément l'un de l'autre.

15. Capteur (1) selon l'une des revendications précédentes,
lequel capteur comprend en outre :
au moins un composant issu d'une liste de composants comprenant :
un connecteur ; une électronique locale destinée à piloter l'élément capteur (5) et/ou à traiter les signaux primaires de l'élément capteur (5), ledit composant étant relié de manière fixe au corps de base du module (3) et étant notamment disposé dans le corps de base du module (3).

16. Point de mesure, comprenant : un capteur (1) selon l'une des revendications précédentes et un réservoir (2) destiné à contenir un produit (M) dont la grandeur process doit être déterminée à l'aide du capteur (100),
la surface de contact (9) s'appuyant contre une partie de surface (O) du réservoir (2) qui lui est complémentaire,
l'axe de référence de la surface de contact (9) coïncidant notamment avec un axe de référence de la partie de surface.

17. Point de mesure selon la revendication 16, pour lequel le réservoir (2) comprend une section de conduite destinée à acheminer le produit (M), la partie de surface (O) étant formée dans ladite section de conduite.
